Europäisches Patentamt

European Patent Office

Office européen des brevets

(19)

(11) **EP 1 577 702 A1**

(12) **EUROPEAN PATENT APPLICATION**
published in accordance with Art. 158(3) EPC

(43) Date of publication:
**21.09.2005 Bulletin 2005/38**

(51) Int Cl.⁷: **G02F 1/167**

(21) Application number: **03780935.7**

(86) International application number:
**PCT/JP2003/016359**

(22) Date of filing: **19.12.2003**

(87) International publication number:
**WO 2004/059379 (15.07.2004 Gazette 2004/29)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.12.2002 JP 2002371995**
**24.12.2002 JP 2002372005**

• **ANZAI, Hiroyuki**
**c/o BRIDGESTONE CORP. Tech. Cent.**
**Kadaira-shi, Tokyo 187-8531 (JP)**
• **AKUZAWA, Kazuyoshi**
**c/o BRIDGESTONE CORP. Tech.Ctr.**
**Kodaira-shi, Tokyo 187-8531 (JP)**
• **TAKAGI, Mitsuharu**
**c/o BRIDGESTONE CORP. Tech.Cent.**
**Kodaira-shi, Tokyo 187-8531 (JP)**

(71) Applicant: **Bridgestone Corporation**
**Tokyo 104-8340 (JP)**

(74) Representative: **Whalley, Kevin**
**Marks & Clerk**
**90 Long Acre**
**London WC2E 9RA (GB)**

(72) Inventors:
• **KOBAYASHI, Taichi**
**c/o BRIDGESTONE CORP.Tech. Cent.**
**Kodaira-shi, Tokyo 187-8531 (JP)**

(54) **IMAGE DISPLAY**

(57)    In an image display device which includes an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrates is applied, are made to move so as to display an image, as the electrodes provided on two substrates, use is made of a pattern electrode patternized in such a manner that a coating area of the electrode satisfies a predetermined condition with respect to a projected area of respective cells (first invention) or a pattern electrode patternized in such a manner that no electrode portion is formed at a vertically lower portion in respective cells (second invention).

*FIG. 5a*

Electrode 1

## FIG. 5b

12-2

7

12-2a

12-2b

11

Electrode 2

## FIG. 5c

12-3

7

12-3a

12-3b

11

Electrode 3

**Description**

TECHNICAL FIELD

The present invention relates to an image display device comprising an image display panel used for a reversible image display device enables to repeatedly display images accompanied by flight and movement of particles utilizing Coulomb's force and so on and particularly relates to an image display device in which even and excellent image can be displayed.

BACKGROUND ART

As an image display device substitutable for liquid crystal display (LCD), image display devices with the use of technology such as an electrophoresis method, an electro-chromic method, a thermal method, dichroic-particles-rotary method are proposed.

As for these image display devices, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability.

In order to solve the problems mentioned above, it is known an image display device which comprises an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrate is applied, are made to fly and move so as to display an image by utilizing Coulomb's force.

In the image display device mentioned above, a plurality of cells are formed between two substrates in such a manner that: a transparent conductive material such as ITO and so on formed on a surface of a glass substrate is etched so as to form a patternized electrode such as a line shape and so on; and partition walls are formed thereon by utilizing a photo-resist.

In this case, since a coating area of the conductive material is made to be 100 % with respect to a projected area of respective cells, the particles are unevenly distributed to a portion of the partition walls formed around respective cells after driving a display cell. As a result, the particles not only come short at a center portion of respective cells but also produce three groups of agglutination members such as "positive charge - positive charge", "positive charge - negative charge" and "negative charge - negative charge" when the particles are gathered at the partition walls due to van der Waals force, electrostatic force and so on. Accordingly, there is a problem such that: "particle drop (phenomenon wherein a display due to a part of the particles in the display element is missed)" is generated at the center portion of respective cells; and thus an appearance becomes worse.

Moreover, since a coating area of the conductive material is made to be 100 % with respect to a projected area of respective cells, the particles are moved downward of the cell due to a gravity and are gathered after a long-term use in the case of arranging the image display panel vertically in a stationary manner. As a result, the particles not only come short at a center portion of respective cells but also produce an agglutination member at a lower portion of the cell. Accordingly, there is a problem such that: "particle drop (phenomenon wherein a display due to a part of the particles in the display element is missed)" is generated at the center portion of respective cells; and thus an appearance becomes worse.

DISCLOSURE OF INVENTION

The present invention is achieved to solve the problems mentioned above and has for its object to provide an image display device which can display even and excellent image due to a prevention of uneven particle distribution to the partition walls and a prevention of particle drop at the center portion of respective cells, by using a pattern electrode which defines a coating area of the electrode with respect to a projected area of respective cells, or, by using a pattern electrode having no electrode portion formed at a vertically lower portion in respective cells.

In order to achieve the object mentioned above, according to a first aspect of the invention, an image display device which comprises an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrates is applied, are made to move so as to display an image, is characterized in that a coating area of the electrode provided on two substrates respectively is patternized with respect to a projected area of respective cells.

In the image display device according to the first aspect of the invention having the construction mentioned above, it is possible to provide the image display device having rapid response rate due to a dry type display, simple construction, inexpensive cost and excellent stability, by constructing a new image display device in which image display elements enabling to move the particles, to which electrostatic field is directly applied, are arranged in a matrix manner. Further, since a coating area of the electrode provided on two substrates respectively is patternized with respect to a projected area of respective cells, the uneven particle distribution to the partition walls and the particle drop at the center portion of respective cells can be prevented, and thus it is possible to provide the image display device which can display even and excellent image.

In the image display device according to the first aspect of the invention, in order to prevent the uneven particle distribution to the partition walls and the particle drop at the center portion of respective cells, it is preferred that at least one of the electrodes provided on the two substrates respectively has a coating area in respective cells of 5 - 99 % with respect to a projected area of respective cells, or, that at least one of the electrodes provided on the two substrates respectively has a coating area in respective cells of 5 - 99 % with respect to a projected area of respective cells.

Moreover, in the image display device according to the first aspect of the invention, in order to further prevent the uneven particle distribution to the partition walls and the particle drop at the center portion of respective cells, it is preferred that a contact dimension between at least one of the electrodes provided on the two substrates respectively and the partition wall is less than 50 % of an inner peripheral dimension of respective cells.

Further, in order to achieve the object mentioned above, according to a second aspect of the invention, an image display device which comprises an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrates is applied, are made to move so as to display an image, is characterized in that, in the case of arranging the image display panel vertically in a stationary manner, the electrode is patternized in such a manner that no electrode portion is formed at a vertically lower portion in respective cells.

In the image display device according to the second aspect of the invention it is possible to provide the image display device having rapid response rate due to a dry type display, simple construction, inexpensive cost and excellent stability, by constructing a new image display device in which image display elements enabling to move the particles, to which electrostatic field is directly applied, are arranged in a matrix manner. Further, since in the case of arranging the image display panel vertically in a stationary manner, the electrode is patternized in such a manner that no electrode portion is formed at a vertically lower portion in respective cells, the uneven particle distribution to the partition walls and the particle drop at the center portion of respective cells can be prevented, and thus it is possible to provide the image display device which can display even and excellent image.

In the image display device according to the second aspect of the invention, in order to prevent the uneven particle distribution to the partition walls and the particle drop at the center portion of respective cells, it is preferred that an area of the no electrode portion formed at a vertically lower portion in respective cells is 5 - 50 % with respect to a projected area of respective cells, or, that an area of the no electrode portion formed at a vertically lower portion in respective cells is 15 - 45 % with respect to a projected area of respective cells.

BRIEF DESCRIPTION OF DRAWINGS

Figs. 1a - 1c are schematic views respectively explaining one embodiment of a display element of an image display panel utilized in an image display device according to the invention, and its display operation theory.

Figs. 2a and 2b are schematic views respectively explaining the image display panel of the image display device according to the invention.

Fig. 3 is a schematic view showing a shape of a display cell formed by partition walls.

Fig. 4 is a schematic view illustrating a method for measuring a surface potential of particles utilized in the image display device according to the invention.

Figs. 5a - 5c are schematic views respectively depicting a pattern electrode with the partition wall in examples 1 - 3 according to a first aspect of the invention.

Figs. 6a - 6c are schematic views respectively showing the pattern electrode with the partition wall in comparative examples 1 - 3 according to the first aspect of the invention.

Figs. 7a - 7c are schematic views respectively illustrating the pattern electrode with the partition wall in examples 11 - 13 according to a second aspect of the invention.

Figs. 8a and 8b are schematic views respectively depicting the pattern electrode with the partition wall in comparative examples 11, 12 according to the second aspect of the invention.

BEST MODE FOR CARRYING OUT THE INVENTION

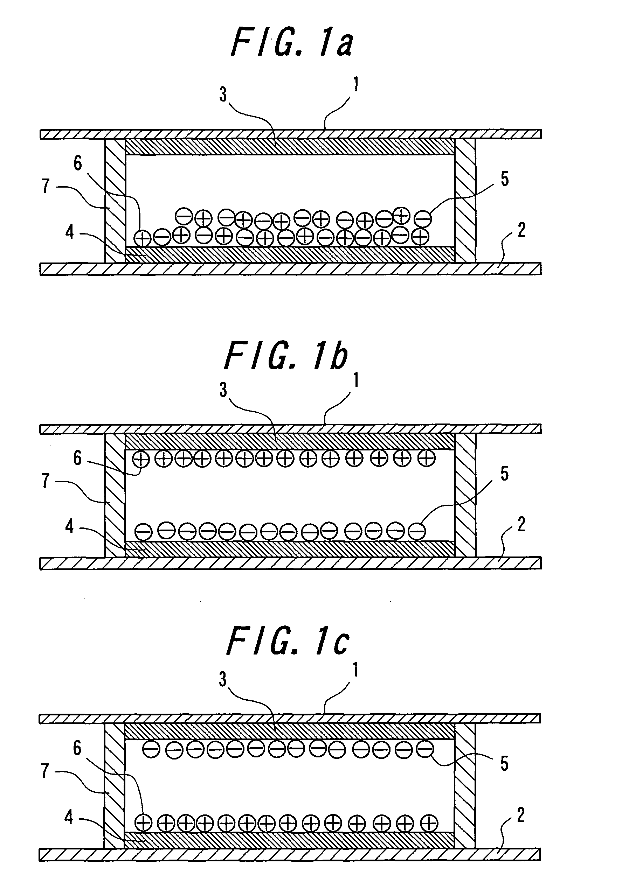

Hereinafter, the embodiments according to the invention will be explained in detail with reference to the drawings. Figs. 1a to 1c are schematic views respectively showing one embodiment of the image display element of the image display panel used for the image display device according to the invention, and its operation theory. In the embodiments shown in Figs. 1a to 1c, numeral 1 is a transparent substrate, numeral 2 is an opposed substrate, numeral 3 is a display electrode (transparent electrode), numeral 4 is an opposed electrode, numeral 5 is a negatively chargeable particle, numeral 6 is a positively chargeable particle and numeral 7 is a partition wall.

Fig. 1a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 1b, the positively chargeable particles 6 fly and move to the side of the display electrode 3 and the negatively chargeable particles 5 fly and move to the side of the opposed electrode 4 by means of Coulomb's force. In this case, a display face viewed from a side of the transparent substrate 1 looks like a color of the positively chargeable particles 6. Next, when a voltage is applied in such a manner that the side of the display electrode 3 becomes high potential and the side of the opposed electrode 4 becomes low potential by reversing potentials, as shown in Fig. 1c, the negatively chargeable particles 5 fly and move to the side of the display electrode 3 and the positively chargeable particles 6 fly and move to the side of the opposed electrode 4 by means of Coulomb's force. In this case, the display face viewed from the side of the transparent substrate 1 looks like a color of the negatively chargeable particles 5.

The display states shown in Figs. 1b and 1c are repeatedly changeable only by reversing the potentials of a power source, and thus it is possible to change colors on the display face reversibly by reversing the potentials of the power source as mentioned above. The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the first aspect of the invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

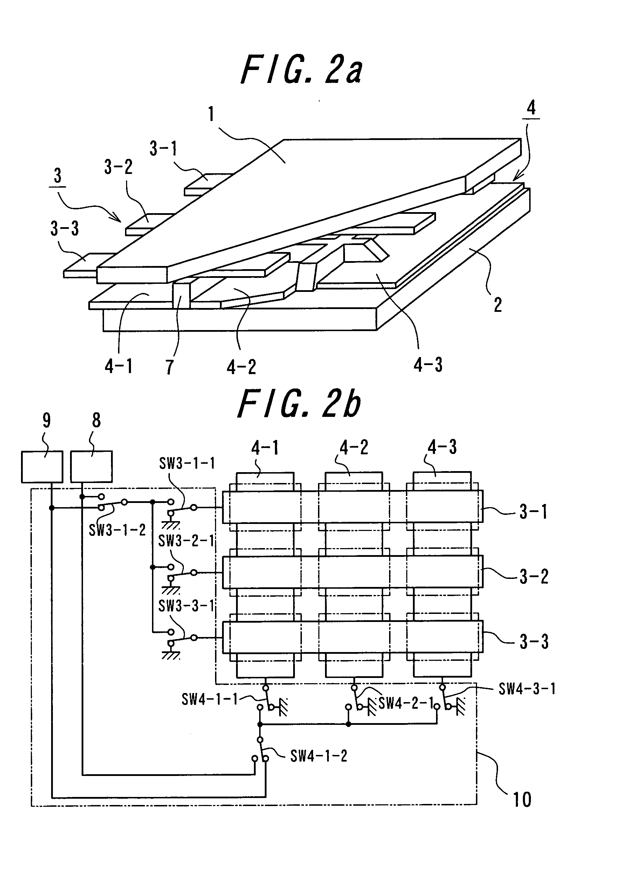

The image display device according to the invention comprises the image display panel in which the image display element mentioned above is arranged in a matrix manner. Figs. 2a and 2b show such one embodiment respectively. In this embodiment, 3×3 matrix is shown for convenience of explanation. When the number of the electrodes is n, it is possible to construct an arbitrary nxn matrix.

In the embodiment shown in Figs. 2a and 2b, display electrodes 3-1 to 3-3 arranged substantially in parallel with each other and opposed electrodes 4-1 to 4-3 arranged substantially in parallel with each other are provided respectively on the transparent substrate 1 and the opposed substrate 2 in such a manner that they are intersected with each other. Serial switches SW3-1-1, SW3-2-1; andSW3-3-1 are respectively connected to the display electrodes 3-1 to 3-3. In the same way, serial switches SW4-1-1, SW4-2-1 and SW4-3-1 are respectively connected to the opposed electrodes 4-1 to 4-3. Further, serial switch SW3-1-2 is connected to SW3-1-1, SW3-2-1 and SW3-3-1 in common, and serial switch SW4-1-2 is connected to SW4-1-1, SW4-2-1 and SW4-3-1 in common.

The switches SW3-n-1 (n=1-3) and the switches SW4-n-1 (n=1-3) serve to switch the connection toward a ground level and the connection toward the next SW3-1-2, respectively. The switches SW3-1-2 and the switches SW4-1-2 serve to switch the connection toward a high voltage generating circuit 8 and the connection toward a low voltage generating circuit 9 respectively. The all the serial switches SW constitute a matrix drive circuit 10. In this embodiment, the 3x3 image display elements are constructed by isolating them by means of the partitions 7.

The operation of the matrix electrode constructed by the display electrodes 3-1 to 3-3 and the opposed electrodes 4-1 to 4-3 mentioned above is performed in such a manner that, in accordance with the image to be displayed, open/close operations of respective switches SW are controlled by means of a sequencer not shown and the 3x3 image display elements are displayed in sequence. This operation is the same as that of the known one basically.

With respect to respective electrodes constituting the matrix electrode, in the case that use is made of the display electrode on the transparent substrate, the display electrode is formed of electro-conductive materials, which are transparent and have pattern formation capability. As such electroconductive materials, metals such as aluminum, silver, nickel, copper and gold, or transparent electro-conductive metal oxides such as ITO, electroconductive tin oxide and electroconductive zinc oxide formed in the shape of thin film by sputtering method, vacuum vapor deposition method, CVD method, and coating method, or coated materials obtained by applying the mixed solution of an electro-conductive agent with a solvent or a synthetic resin binder are used.

Typical examples of the electroconductive materials include cationic polyelectrolyte such as benzyltrimethylammonium chloride, tetrabutylammonium perchlorate and so on, anionic polyelectrolyte such as polystyrenesulfonate, polyacrylate, and so on, or electro-conductive fine powders of zinc oxide, tin oxide, or indium oxide. Additionally, the thickness of the electrode may be suitable unless the electroconductivity is absent or any hindrance exists in optical transparency, and it is preferable to be 3 to 1000 nm, more preferable to be 5 to 400 nm. The foregoing transparent electrode materials can be employed as the electrode arranged on the opposed substrate. However, non-transparent electrode materials such as aluminum, silver, nickel, copper, and gold can be also employed if it is not necessary to use the transparent electrode.

It is preferred that an insulation coating layer is formed on the electrode so as not to reduce charges of the charged particles. As such insulation coating layer, if use is made of a positively chargeable resin with respect to the negatively chargeable particles and a negatively chargeable resin with respect to the positively chargeable particles, the charges of the particles are to be difficult to reduce and it is particularly preferable.

Hereinafter, the substrate used in the image display device according to the invention will be explained. With respect to the substrate, at least one of the substrates is the transparent substrate through which a color of the particles can be observed from outside of the device, and it is preferred to use a material having a high transmission factor of visible light and an excellent heat resistance. Whether a flexibility of the substrate is necessary or not is suitably selected in accordance with its use. For example, it is preferred to use a material having flexibility for the use of electronic paper and so on, and it is preferred to use a material having no flexibility for the use of a display of portable device such as mobile phone, PDA, laptop computer and so on.

Examples of the substrate material include polymer sheets such as polyethylene terephthalate, polyether sulfone, polyethylene, polycarbonate, polyimide or acryl and inorganic sheets such as glass, quartz or so. The opposed substrate may be transparent or may be opaque. The thickness of the substrate is preferably 2 to 5000 µm, more preferably 5 to 1000 µm. When the thickness is too thin, it becomes difficult to maintain strength and distance uniformity between the substrates, and when the thickness is too thick, vividness and contrast as a display capability degrade, and in particular, flexibility in the case of using for an electronic paper deteriorates.

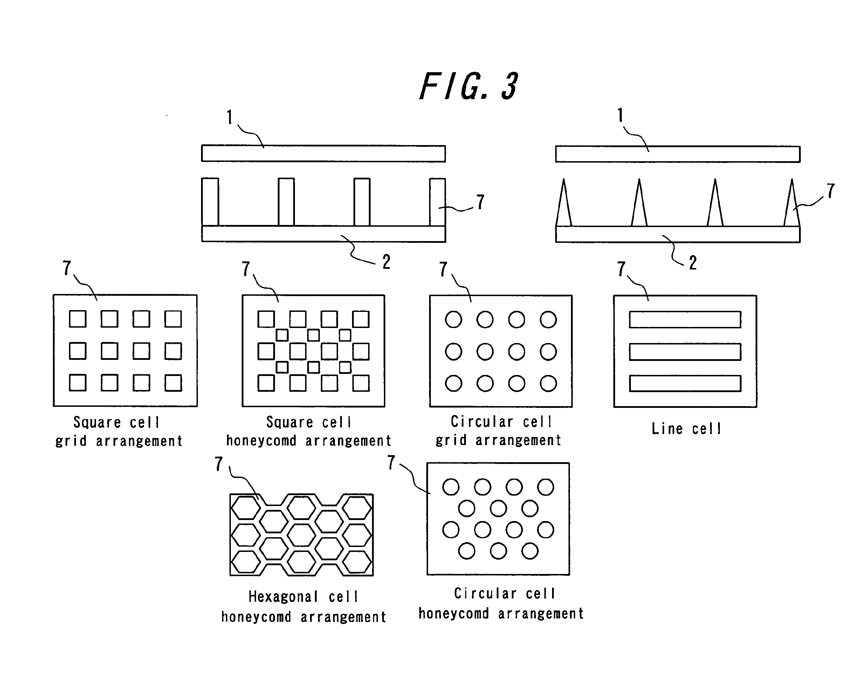

Moreover, as shown in Fig. 2a, it is preferred to arrange the partition wall 7 to respective display elements. The display cell formed by the partition walls each made of rib has a square shape, a triangular shape, a line shape, a circular shape, a hexagon shape as shown in Fig. 3 viewed from a plane surface of the substrate, and the arrangement thereof is grid-like, honeycomb and so on.

In this manner, it is possible to prevent an unnecessary movement of the particles in a direction parallel to the substrate, to help a repeatedly endurance property and a memory maintaining property and to improve a strength of the image display panel by making a distance between the substrates even and strong. The formation method of the partition wall is not particularly restricted, however, a screen printing method wherein pastes are overlapped by coating repeatedly on a predetermined position by screen plate; a sandblast method wherein partition materials are painted with a desired thickness entirely over the substrate and then after coating resist pattern on the partition materials which is wanted to be left as a partition, jetting abrasive to cut and remove partition materials aside from the partition part; lift-off method (additive method) wherein a resist pattern is formed on the substrate using photosensitive polymer, and then after burying paste into a resist recess, removing the resist; photolithography method wherein the photosensitive resin composition containing the partition materials is applied over the substrate and then obtaining a desired pattern by exposure & developing; and mold formation method wherein paste containing the partition materials is applied over the substrate and then forming a partition by compression bonding & pressure forming the dies having rugged structure; and so on are adopted. Further, modifying the mold formation method, relief embossing method wherein a relief pattern provided by a photosensitive polymer composition is used as a mold is also adopted. Among them, the photolithography method using the resist film is preferably used. Furthermore, it is preferred to set a width of the partition wall to 1 - 100 μm more preferably 5 - 100 μm

Hereinafter, the particles used in the image display device according to the invention will be explained. In the present invention, as the particles for display, although any of colored particles negatively or positively chargeable having capability of flying and moving by Coulomb's force are employable, spherical particles with light specific gravity are particularly preferable. The average particle diameter of the particles is preferable to be 0.1 to 50 μm, particularly to be 1 to 30 μm. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, but the memory characteristic will degrade.

Although the method for charging the particles negatively or positively is not particularly limited, a corona discharge method, an electrode injection-charge method, a friction charge method and so on are employable. It is preferred that the particle measured by a blow-off method by using carriers has a surface charge density not less than 5 μm/m$^2$ and not greater than 150 μm/m$^2$. When the absolute value of the surface charge density of the particles is smaller than this range, the response speed in response to a deviation of the electrostatic field becomes slower and the memory characteristics become lower. When the absolute value of the surface charge density of the particles is larger than this range, an imaging force to the substrate and electrode becomes too stronger. Therefore, the following ability at the inversion of its electric field becomes poor, but the memory characteristic is favorable.

A charge amount measurement and a particle gravity measurement, which are necessary to calculate the surface charge density used in the invention, can be performed as mentioned below. That is, according to a blow-off method, the particles and carrier particles are sufficiently contacted and a saturated charge amount thereof is measured, so that a charge amount per a unit weight of the particles can be measured. Then, a particle diameter and a specific gravity of the particles are separately measured, and the surface charge density of the particles is calculated by using them.

<Blow-off measuring theory and method>

In the blow-off method, a mixture of the powders and the carriers are placed into a cylindrical container with nets at both ends, and high-pressure gas is blown from the one end to separate the powders and the carriers, and then only the powders are blown off from the mesh of the net. In this occasion, charge amount of reverse blown polarity remains on the carriers with the same charge amount of the powders carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

In the invention, as a blow-off powder charge amount measuring instrument, TB-200 produced by Toshiba Chemical Co., Ltd. was used, F963-2535 available from Powder TEC Co., Ltd. was employed as the same kind of carriers, and a specific gravity of the particle substance constituting the particles was measured by a multi-volume density meter H1305 produced by Shimadzu Corporation. Then, the charge density per unit surface area (unit: μC/m$^2$) was calculated.

Because it is necessary for the particles to hold the charged electric charge, insulating particles with the volume specific resistance of $1\times10^{10}$ Ω·cm or greater are preferable, and in particular, insulating particles with the volume specific resistance of $1\times10^{12}$ Ω·cm or greater are more preferable. Further, the particles with slow charge attenuation property evaluated by the measuring method below are more preferable.

That is, the particles are made into a film having a thickness of 5 - 100 μm by means of a press method, a heating/melting method, a casting method and so on, and the voltage of 8 kV is applied to a Corona generator disposed with a distance of 1 mm to the film surface so as to generate Corona discharge, which charges the film surface. Then, the change of the surface potential is measured to determine the suitability. In this occasion, it is preferable to select the material whose maximum surface potential will be 300 V or greater after 0.3 seconds, more preferable to select the material whose maximum surface potential will be 400 V or greater after 0.3 second as the material for composing the particles.

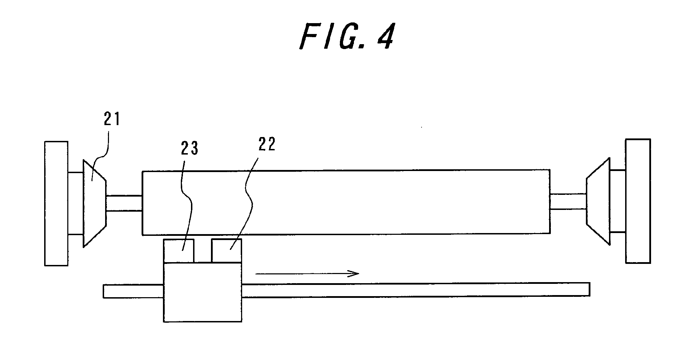

Additionally, the foregoing surface potential is measured by means of an instrument (CRT2000 produced by QEA Inc.) as shown in Fig. 4. In this instrument both end portions of a roll shaft being held with chuck 31, compact scorotron discharger 32 and surface potential meter 33 are spaced with predetermined interval to form a measurement unit. Facedly deploying the measurement unit with a distance of 1 mm from the surface of the film, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of $25 \pm 3°C$ and the humidity of $55 \pm 5\%$ RH.

If the particles satisfy electrostatic property and so on, the particles may be formed by any materials. For example, it is formed by resin, charge control agent, coloring agent, inorganic additive and so on, or, by coloring agent and so on only.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable. Two kinds or more of these may be mixed and used.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon. Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake. Examples of orange pigments include red chrome yellow, molybdenum orange, permanent orange GTR, pyrazolone orange, Balkan orange, Indanthrene brilliant orange RK, benzidine orange G, and Indanthrene brilliant orange GK. Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake. Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indanthrene blue BC. Examples of green pigments include chrome green, chromium oxide, pigment green B, Malachite green lake, and final yellow green G. Further, examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc. These coloring agents may be used alone or in combination of two or more kinds thereof. Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

The distance between the transparent substrate and the opposed substrate is suitably adjusted in a manner where the particles can move and maintain the contrast of image display; however, it is adjusted usually within 10 to 5000 µm, preferably within 30 to 500 µm. Moreover, the particle filling amount (volume occupying rate) of the particles existing in the space between the faced substrates is preferable to be 5 to 70 vol%, more preferable to be 10 to 65 vol%, further more preferable to be 10 to 55 vol%. When the volume occupying rate of the particles is less than 5 vol%, it is not possible to display a clear image. When the volume occupying rate of the particles exceeds 70 vol%, the particles are not easily moved. Here, the volume of space means a volume, in which the particles can be filled, obtained by substituting an occupied portion of the partition wall 4 and a seal portion of the device from a portion sandwiched between the opposed substrates 1 and 2.

Further, in the present invention, it is important to control a gas in a gap surrounding particles between the substrates, and a suitable gas control contributes an improvement of a display stability. Specifically, it is important to control a humidity of the gap gas to not more than 60% RH at 25°C, preferably not more than 50% RH, more preferably not more than 35% RH.

In the image display panel used in the image display device according to the invention, plural of the foregoing display elements are disposed in a matrix form, and images can be displayed. In the case of monochrome display, one display element makes one pixel. In the case of full color display, three kinds of display elements, i.e., one group of display elements each having color plate of R (red), G (green) and B (blue) respectively and each having particles of black composes a set of disposed elements preferably resulting in the reversible image display panel having the sets of the elements.

A kind of the gap gas is not limited if it has the humidity mentioned above, but it is preferred to use dry air, dry nitrogen gas, dry helium gas, dry carbon dioxide gas, dry methane gas and so on.

It is necessary to seal this gas in the device so as to maintain the humidity mentioned above. For example, it is important to perform the operations of filling the particles and assembling the substrate under an atmosphere having a predetermined humidity and to apply a seal member and a seal method for preventing a humidity inclusion from outside of the device.

The image display device according to the invention is applicable to the image display unit for mobile equipment such as notebook personal computers, PDAs, cellular phones and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric POP, electric advertisement, electric price tag, electric musical score, RF-ID device and so on.

Then, various examples of the pattern electrode in the image display device according to the invention will be explained.

(Examples according to a first aspect of the invention)

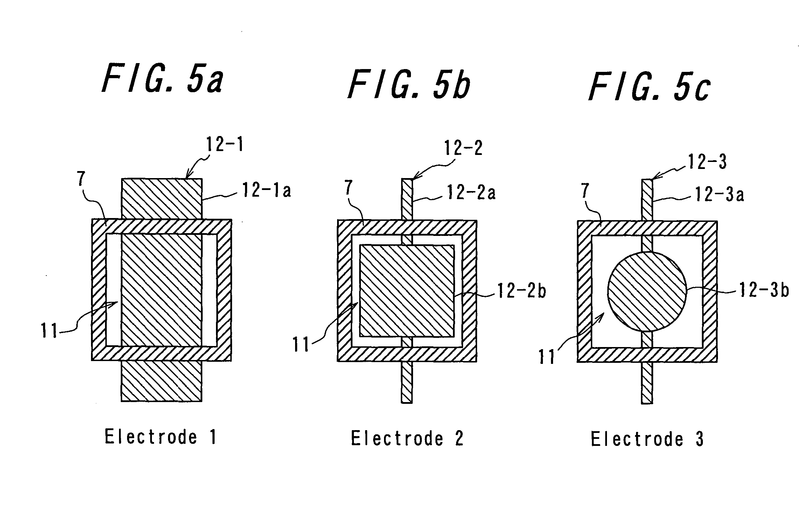

In the image display device according to the first aspect of the invention, a pattern electrode 12 shown in Figs. 5a, 5b and 5c (pattern electrodes 12-1 - 12-3) is used.

The pattern electrode 12 (the pattern electrodes 12-1 - 12-3) according to the invention is patternized to have a predetermined pattern with respect to respective cells 11 formed by a frame-like partition wall 7, and is used as the display electrode 3 and the opposed substrate 4.

The pattern electrode 12-1 shown in Fig. 5a (hereinafter, referred as electrode 1) is constructed only by a linear portion 12-1a in such a manner that line spaces are formed at left and right ends in the cell 11.

The pattern electrode 12-2 shown in Fig. 5b (hereinafter, referred as electrode 2) is constructed by a linear portion 12-2a and a square portion 12-2b in such a manner that line spaces are formed at upper, lower, left and right ends in the cell 11.

The pattern electrode 12-2 shown in Fig. 5c (hereinafter, referred as electrode 3) is constructed by a linear portion 12-3a and a circular portion 12-3b in such a manner that spaces are formed at upper, lower, left and right peripheral portions in the cell 11.

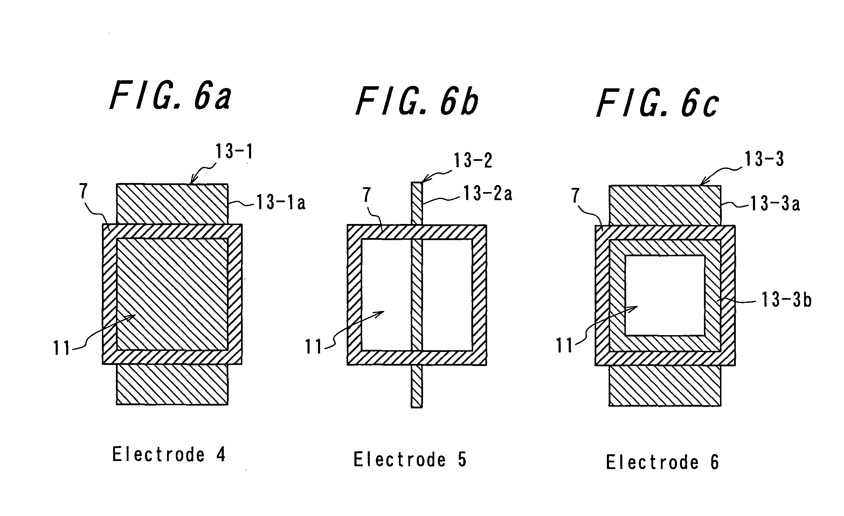

Pattern electrodes 13 (13-1 - 13-3) shown in Figs. 6a, 6b and 6c are comparative examples so as to be compared with the above examples of the pattern electrodes in the image display device according to the invention.

The pattern electrode 13-1 shown in Fig. 6a (hereinafter, referred as electrode 4) is constructed only by a linear portion 13-1a, which covers overall portion in the cell 11.

The pattern electrode 13-2 shown in Fig. 6b (hereinafter, referred as electrode 5) is constructed only by a narrow linear portion 13-2a, which covers only a center portion in upper and lower directions in the cell 11.

The pattern electrode 13-3 shown in Fig. 6c (hereinafter, referred as electrode 6) is constructed by a linear portion 13-3a and a hollow portion 13-3b in such a manner that a square space is formed at a center portion in the cell 11.

The image display devices including the electrode 1 - electrode 6 were manufactured as follows.

<Manufacture of electrode pattern>

The electrode 1 - electrode 6 were obtained in such a manner that a dry photo-resist was adhered to a glass substrate, to which indium oxide having thickness of about 500 Å was arranged, and an exposing step, a developing step and an etching step were performed through a positive mask having respective electrode patterns.

<Manufacture of partition wall>

The pattern electrodes (electrode 1 - electrode 6) with the partition wall shown in Figs. 5a - 5c and Figs. 6a - 6c were obtained in such a manner that a dry photo-resist having a thickness of 50 µm was adhered to respective electrodes manufactured as mentioned above, and an exposing step and a developing step were performed through a negative mask having a partition wall pattern of 50 µm partition wall and 50 µm □ cell.

<Manufacture of particles>

Two kinds of the particles (particles A, particles B) were prepared.

The particles A (black color particles) were manufactured in such a manner that acrylic urethane resin: EAU53B (Asia Industry Co., Ltd.)/ IPDI cross-linking agent: Excel-Hardener HX (Asia Industry Co., Ltd.), CB (Carbon Black) 4 phr, charge control agent: BontronN07 (Orient Chemical Industries Ltd.) 2 phr were added, mixed, ground and classified by a jet-mill.

The particles B (white color particles) were manufactured in such a manner that acrylic urethane resin: EAU53B (Asia Industry Co., Ltd.) / IPDI cross-linking agent: Excel-Hardener HX (Asia Industry Co., Ltd.), titanium oxide 10 phr, charge control agent: BontronE89 (Asia Industry Co., Ltd.) 2 phr were added, mixed, ground and classified by the jet-mill.

After that, the particles A and the particles B were filled to the thus prepared substrate, on which the pattern electrodes with the partition wall were arranged, by 12 g/m$^2$ respectively with respect to the projected area of the cell 11. Then, the same kind of the substrate, on which the pattern electrodes with the partition wall were arranged, was stacked and connected as the opposed substrate to the substrate mentioned above by using epoxy adhesive, so that the image display device in which a distance between the opposed substrates was 100 µm.

<Estimation of display function>

A voltage of 200 V was applied between the electrodes of the thus manufactured image display device, and performances after inversion at 50 times (initial state) and after inversion at 10000 times (endured state) were measured.

As the estimation method of the display function, a reflectance of white display and a reflectance of black display were measured at a center portion of the cell by means of EYE SCALE 3 (Eye-Systems Incorporated), and then it was assumed as NG that a contrast of the initial state or the endured state was not greater than 3. Here, a contrast ratio was calculated from contrast ratio = (reflectance density of black display)/(reflectance density of white display).

If summarized the above, specifications of the electrode 1 - electrode 6 were summarized as the following Table 1, and estimations of the electrode 1 - electrode 6 were summarized as the following Table 2.

Table 1

|  |  | Electrode 1 | Electrode 2 | Electrode 3 | Electrode 4 | Electrode 5 | Electrode 6 |
|---|---|---|---|---|---|---|---|
| Width of partition wall | µm | 50 | 50 | 50 | 50 | 50 | 50 |
| Height of partition wall | µm | 50 | 50 | 50 | 50 | 50 | 50 |
| Area of display portion (1) | mm$^2$ | 0.25 | 0.25 | 0.25 | 0.25 | 0.25 | 0.25 |
| Inner circumference of display portion (2) | µm | 2000 | 2000 | 2000 | 2000 | 2000 | 2000 |
| Electrode area in display portion (3) | mm$^2$ | 0.20 | 0.20 | 0.13 | 0.25 | 0.01 | 0.13 |

Table 1   (continued)

|  |  | Electrode 1 | Electrode 2 | Electrode 3 | Electrode 4 | Electrode 5 | Electrode 6 |
|---|---|---|---|---|---|---|---|
| Contact portion between electrode and partition wall (4) | µm | 800 | 100 | 100 | 2000 | 20 | 2000 |
| (3)/(1) | % | 80 | 80 | 52 | 100 | 4 | 52 |
| (4)/(2) | % | 40 | 5 | 5 | 100 | 1 | 100 |

Table 2

|  |  | Example 1 | Example 2 | Example 3 | Comparative Example 1 | Comparative Example 2 | Comparative Example 3 |
|---|---|---|---|---|---|---|---|
| Electrode category (1) | µm | electrode 1 | electrode 2 | electrode 3 | electrode 4 | electrode 5 | electrode 6 |
| Electrode category (2) | µm | electrode 1 | electrode 2 | electrode 3 | electrode 4 | electrode 5 | electrode 6 |
| After inversion at 50 times | reference of white display % | 29.8 | 33.0 | 28.0 | 31.9 | 21.3 | 29.0 |
| | reference of black display % | 4.2 | 4.4 | 4.3 | 4.2 | 14.2 | 16.1 |
| | contrast | 7.1 | 7.5 | 6.5 | 7.6 | 1.5 | 1.8 |
| After inversion at 10000 times | reference of white display % | 28.6 | 30.8 | 28.1 | 14.0 | 17.3 | 25.9 |
| | reference of black display % | 4.4 | 4.6 | 4.6 | 5.2 | 14.4 | 16.2 |
| | contrast | 6.5 | 6.7 | 6.1 | 2.7 | 1.2 | 1.6 |
| Decision | | ○ | ○ | ○ | × | × | × |

From the results shown in Table 1 and Table 2, the electrode 1 - electrode 3 of the examples 1 - 3, in which a coating area of the electrode in respective cells was 80 %, 80 %, 52 % with respect to the projected area of respective cells, and, in which a contact dimension between the electrode and the partition wall was 40 %, 5 %, 5 %, were estimated as OK. However, the electrode 4 - electrode 6 of the comparative examples 1 - 3, in which a coating area of the electrode in respective cells was 100 %, 4 %, 2 % with respect to the projected area of respective cells, and, in which a contact dimension between the electrode and the partition wall was 100 %, 1 %, 100 %, were estimated as NG. Therefore, the followings were understood.

(1) It is preferred that at least one of the electrodes provided to the two substrates respectively has a coating area of the electrode in respective cells such that it is 5 - 99 % with respect to the projected area of respective cells.
(2) It is further preferred that at least one of the electrodes provided to the two substrates respectively has a coating area of the electrode in respective cells such that it is 30 - 90 % with respect to the projected area of respective cells.
(3) It is preferred that a contact dimension between at least one of the electrodes provided to the two substrates respectively and the partition wall is less than 50% of an inner peripheral dimension of respective cells.

Therefore, it is possible to obtain the image display panel having even and excellent display function from the examples 1-3 corresponding to the electrode 1 - electrode 3, which satisfy all the conditions (1) - (3) mentioned above.

In the embodiment mentioned above, the electrodes (display electrode and opposed electrode are arranged to the substrates (transparent substrate and opposed substrate). In this case, a term "arranged to the substrate" means not only the case such that "the electrode is directly arranged on the substrate" but also the case such that "the electrode is separately arranged on the substrate".

(Examples according to a second aspect of the invention)

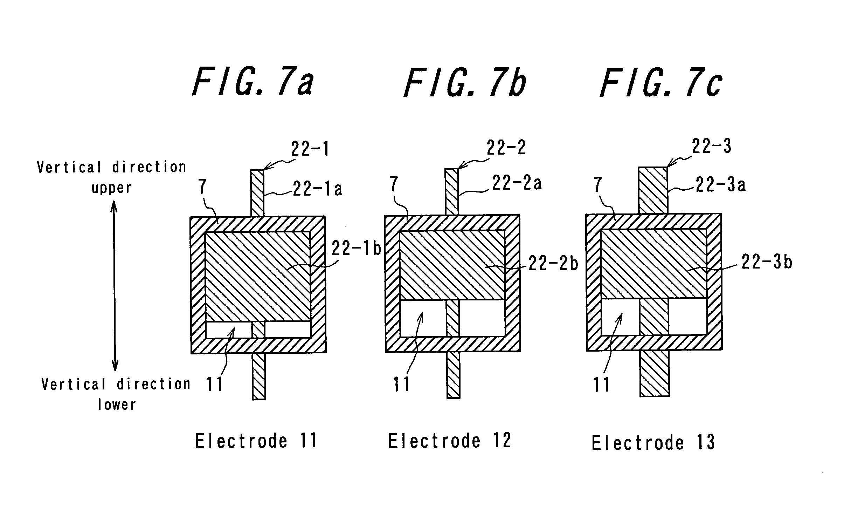

In the image display device according to the second aspect of the invention, a pattern electrode 22 shown in Figs. 7a, 7b and 7c (pattern electrodes 22-1 - 22-3) is used.

The pattern electrode 22 (the pattern electrodes 22-1 - 22-3) according to the invention is patternized to have a predetermined pattern with respect to respective cells 11 formed by a frame-like partition wall 7, and is used as the display electrode 3 and the opposed substrate 4.

The pattern electrode 22-1 shown in Fig. 7a (hereinafter, referred as electrode 11) is constructed by a linear portion 22-1a and a square portion 22-1b in such a manner that a space extending in a horizontal direction is formed at a vertically lower portion in respective cells 11 in the case of arranging the image display panel vertically in a stationary manner.

The pattern electrode 22-2 shown in Fig. 7b (hereinafter, referred as electrode 12) is constructed by a linear portion 22-2a having a width equal to that of the linear portion 22-1a mentioned above and a square portion 22-2b having an area smaller than that of the square portion 22-1b mentioned above in such a manner that a space extending in a horizontal direction is formed at a vertically lower portion in respective cells 11 in the case of arranging the image display panel vertically in a stationary manner.

The pattern electrode 22-3 shown in Fig. 7c (hereinafter, referred as electrode 13) is constructed by a linear portion 22-3a having a width larger than that of the linear portion 22-2a mentioned above and a square portion 22-3b having an area equal to that of the square portion 22-2b mentioned above in such a manner that a space extending in a horizontal direction is formed at a vertically lower portion in respective cells 11 in the case of arranging the image display panel vertically in a stationary manner.

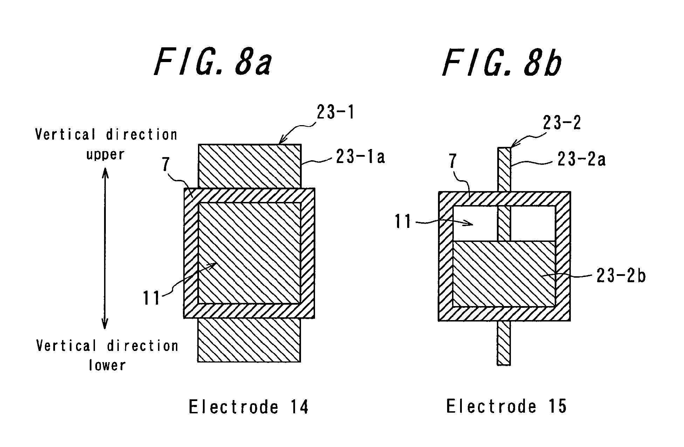

Pattern electrodes 23 (23-1, 23-2) shown in Figs. 8a and 8b are comparative examples so as to be compared with the above examples of the pattern electrodes in the image display device according to the invention.

The pattern electrode 23-1 shown in Fig. 8a (hereinafter, referred as electrode 14) is constructed only by a linear portion 23-1a, which covers overall portion in the cell 11 in the case of arranging the image display panel vertically in a stationary manner.

The pattern electrode 23-2 shown in Fig. 8b (hereinafter, referred as electrode 15) is constructed by a linear portion 23-2a and a square portion 23-2b in such a manner that a space extending in a horizontal direction is formed at a vertically lower portion in respective cells 11 in the case of arranging the image display panel vertically in a stationary manner. This electrode 15 inverts the electrode 12 up and down vertically.

The image display devices including the electrode 11 - electrode 15 were manufactured as follows.

<Manufacture of electrode pattern>

The electrode 1 - electrode 6 were obtained in such a manner that a dry photo-resist was adhered to a glass substrate, to which indium oxide having thickness of about 500 Å was arranged, and an exposing step, a developing step and an etching step were performed through a positive mask having respective electrode patterns.

<Manufacture of partition wall>

The pattern electrodes (electrode 11 - electrode 15) with the partition wall shown in Figs. 7a - 7c and Figs. 8a and 8b were obtained in such a manner that a dry photo-resist having a thickness of 50 μm was adhered to respective electrodes manufactured as mentioned above, and an exposing step and a developing step were performed through a negative mask having a partition wall pattern of 50 μm partition wall and 50 μm □ cell.

<Manufacture of particles>

Two kinds of the particles (particles A, particles B) were prepared.

The particles A (black color particles) were manufactured in such a manner that acrylic urethane resin: EAU53B (Asia Industry Co., Ltd.)/ IPDI cross-linking agent: Excel-Hardener HX (Asia Industry Co., Ltd.), CB (Carbon Black) 4 phr, charge control agent: BontronN07 (Orient Chemical Industries Ltd.) 2 phr were added, mixed, ground and classified by a jet-mill.

The particles B (white color particles) were manufactured in such a manner that acrylic urethane resin: EAU53B (Asia Industry Co., Ltd.) / IPDI cross-linking agent: Excel-Hardener HX (Asia Industry Co., Ltd.), titanium oxide 10 phr, charge control agent: BontronE89 (Asia Industry Co., Ltd.) 2 phr were added, mixed, ground and classified by the jet-mill.

After that, the particles A and the particles B were filled to the thus prepared substrate, on which the pattern electrodes with the partition wall were arranged, by 12 g/m$^2$ respectively with respect to the projected area of the cell 11. Then, the same kind of the substrate, on which the pattern electrodes with the partition wall were arranged, was stacked and connected as the opposed substrate to the substrate mentioned above by using epoxy adhesive, so that the image display device in which a distance between the opposed substrates was 100 μm.

<Estimation of display function>

A voltage of 200 V was applied between the electrodes of the thus manufactured image display device, and performances after inversion at 50 times (initial state) and after inversion at 10000 times (endured state) were measured.

As the estimation method of the display function, a reflectance of white display and a reflectance of black display were measured at a center portion of the cell by means of EYE SCALE 3 (Eye-Systems Incorporated), and then it was assumed as NG that a contrast of the initial state or the endured state was not greater than 3. Here, a contrast ratio was calculated from contrast ratio = (reflectance density of black display)/(reflectance density of white display).

If summarized the above, specifications of the electrode 11 - electrode 15 were summarized as the following Table 3, and estimations of the electrode 11 - electrode 15 were summarized as the following Table 4.

Table 3

|  |  | Electrode 11 | Electrode 12 | Electrode 13 | Electrode 14 | Electrode 15 |
|---|---|---|---|---|---|---|
| Width of partition wall | μm | 50 | 50 | 50 | 50 | 50 |
| Height of partition wall | μm | 50 | 50 | 50 | 50 | 50 |
| Area of display portion (1) | mm$^2$ | 0.250 | 0.250 | 0.250 | 0.250 | 0.250 |
| Electrode area in display portion | mm$^2$ | 0.205 | 0.151 | 0.190 | 0.250 | 0.151 |
| Area of no electrode portion in display portion (2) | mm$^2$ | 0.045 | 0.099 | 0.060 | 0 | 0.099 |
| (2)/(1) | % | 18 | 40 | 24 | 0 | 40 |
| Region of arranging no electrode portion |  | lower | lower | lower | - | upper |

Table 4

|  |  | Example 11 | Example 12 | Example 13 | Comparative Example 11 | Comparative Example 12 |
|---|---|---|---|---|---|---|
| Electrode category (1) | μm | electrode 11 | electrode 12 | electrode 13 | electrode 14 | electrode 15 |
| Electrode category (2) | μm | electrode 11 | electrode 12 | electrode 13 | electrode 14 | electrode 15 |

Table 4   (continued)

| | | Example 11 | Example 12 | Example 13 | Comparative Example 11 | Comparative Example 12 |
|---|---|---|---|---|---|---|
| After inversion at 50 times | reference of white display % | 32.3 | 30.2 | 29.0 | 31.9 | 31.8 |
| | reference of black display % | 4.3 | 4.2 | 4.2 | 4.2 | 4.3 |
| | contrast | 7.5 | 7.2 | 6.9 | 7.6 | 7.4 |
| After inversion at 10000 times | reference of white display % | 2.87 | 29.3 | 27.3 | 14.0 | 11.1 |
| | reference of black display % | 4.7 | 4.5 | 4.4 | 5.2 | 2.1 |
| | contrast | 6.1 | 6.5 | 6.2 | 2.7 | 2.1 |
| Decision | | ○ | ○ | ○ | × | × |

From the results shown in Table 3 and Table 4, the electrode 11 - electrode 13 of the examples 11 - 13, in which an area of no electrode portion formed at vertically lower portion in respective cells was 18 %, 40 %, 24 % with respect to the projected area of respective cells, were estimated as OK. However, the electrode 14 of the comparative examples 11, in which an area of no electrode portion formed at vertically lower portion in respective cells was 0 % with respect to the projected area of respective cells, and the electrode 15 of the comparative example 12, in which an area of no electrode portion formed at vertically upper portion in respective cells was 40 % with respect to the projected area of respective cells, were estimated as NG. Therefore, the followings were understood.

(1) It is preferred that an area of no electrode portion formed at vertically lower portion in respective cells is 5 - 50 % with respect to the projected area of respective cells.
(2) It is further preferred that an area of no electrode portion formed at vertically lower portion in respective cells is 15 - 50 % with respect to the projected area of respective cells.

Therefore, it is possible to obtain the image display panel having even and excellent display function from the examples 11 - 13 corresponding to the electrode 11 - electrode 13, which satisfy all the conditions (1) and (2) mentioned above.
In the embodiment mentioned above, the electrodes (display electrode and opposed electrode are arranged to the substrates (transparent substrate and opposed substrate). In this case, a term "arranged to the substrate" means not only the case such that "the electrode is directly arranged on the substrate" but also the case such that "the electrode is separately arranged on the substrate".
Moreover, in the embodiments mentioned above, the explanation is made to the particles, but, if substituting the particles for liquid powders, the present invention can be preferably applied as it is.
In the present invention, a term "liquid powder" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powder.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the image display device according to the invention, a solid material is used as a dispersant.

When use is made of the liquid powders, in the image display device according to the invention, the liquid powders, which indicate a high fluidity in an aerosol state such that solid-like substances are suspended in a gas stably as dispersoid, are sealed between opposed two substrates, at least one of two substrates being transparent. Such liquid powders can be easily and stably moved by means of Coulomb's force and do on generating by applying a low voltage.

Then, the liquid powders will be explained.

As mentioned above, the liquid powders are an intermediate material having both of liquid properties and particle properties and exhibiting a self-fluidity without utilizing gas force and liquid force. The liquid powders become particularly an aerosol state, and thus, in the image display device according to the invention, it is utilized under such a condition that a solid material is floated in a gas as a dispersant in a relatively stable manner.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult. On the other hand, if the apparent volume in the maximum floating state is larger than 12 times, a handling inconvenience during a liquid powder filling operation into the device such as a particle over-scattering occurs. That is, it is measured by filling the liquid powders in a transparent closed vessel through which the liquid powders are seen; vibrating or dropping the vessel itself to obtain a maximum floating state; and measuring an apparent volume at that time from outside of the vessel. Specifically, the liquid powders having a volume 1/5 of the vessel are filled as the liquid powders in a vessel with a polypropylene cap having a diameter (inner diameter) of 6 cm and a height of 10 cm (product name I-boy® produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, in the image display device according to the invention, it is preferred that a time change of the apparent volume of the liquid powders satisfies the floating formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state. In this case, in the image display device according to the invention, it is preferred to set the time change $V_{10}/V_5$ of the apparent volume of the liquid powders to larger than 0.85, more preferably larger than 0.9, most preferably larger than 0.95. If the time change $V_{10}/V_5$ is not larger than 0.8, the liquid powders are substantially equal to normal particles, and thus it is not possible to maintain a high speed response and durability according to the invention.

Moreover, it is preferred that the average particle diameter d(0.5) of the particle materials constituting the liquid powders is 0.1 - 20 μm, more preferably 0.5 - 15 μm, most preferably 0.9 - 8 μm. If the average particle diameter d(0.5) is less than 0.1 μm, a display controlling becomes difficult. On the other hand, if the average particle diameter d(0.5) is larger than 20 μm, a display is possible, but opacifying power is decreased and thus a thin shape device is difficult. Here, the average particle diameter d(0.5) of the particle materials constituting the liquid powders is equal to d(0.5) in the following particle diameter distribution Span.

It is preferred that particle diameter distribution Span of the particle materials constituting the liquid powders, which is defined by the following formula, is not more than 5 preferably not more than 3:

$$Span = (d(0.9) - d(0.1))/d(0.5);$$

here, d(0.5) means a value of the particle diameter expressed by μm wherein an amount of the particle materials constituting the liquid powders having the particle diameter larger than this value is 50% and an amount of the particle materials constituting the liquid powders having the particle diameter expressed by μm wherein an amount of the particle materials constituting the liquid powders having a particle diameter smaller than this value is 10%, and d(0.9) means a value of the particle diameter expressed by μm wherein an amount of the particle materials constituting the liquid powders having the particle diameter smaller than this value is 90%. If the particle diameter distribution Span of the particle materials constituting the liquid powders is set to not more than 5, the particle diameter becomes even and it is possible to perform an even liquid powder movement.

Here, the particle diameter distribution and the particle diameter mentioned above can be measured by means of a laser diffraction / scattering method. When a laser light is incident upon the liquid powders to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the liquid powders setting in a nitrogen gas flow are calculated by an installed analysis software (which is based on a volume standard distribution due to Mie's theory).

The liquid powders may be formed by mixing necessary resin, charge control agent, coloring agent, additive and so on and grinding them, or, by polymerizing from monomer, or, by coating a particle with resin, charge control agent, coloring agent, and additive and so on. Hereinafter, typical examples of resin, charge control agent, coloring agent, additive and so on constituting the liquid powders will be explained.

Typical examples of the resin include urethane resin, acrylic resin, polyester resin, acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers.

Examples of the electric charge control agent include, positive charge control agent include the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of basic or acidic dye may be employable. Examples include Nigrosine, Methylene Blue, quinoline yellow, rose bengal and do on.

Examples of the inorganic additives include titanium oxide, Chinese white, zinc sulfide, antimonial oxide, calcium carbonate, zinc white, talc, silica, calcium silicate, alumina white, cadmium yellow, cadmium red, cadmium orange, titanium yellow, iron blue, ultramarine blue, cobalt blue, cobalt green, cobalt violet, ferric oxide, carbon black, copper powder, aluminum powder and so on.

However, if the above materials are only mixed or coated with no contrivance, the liquid powder exhibiting an aerosol state cannot be obtained. The regular method of forming the liquid powder exhibiting an aerosol state is not defined, but the following method is preferably used.

At first, inorganic fine particles having an average particle size of 20 - 100 nm preferably 20 - 80 nm are preferably fixed on a surface of materials constituting the liquid powder. Moreover, it is preferred to treat the inorganic fine particles by a silicone oil. Here, as for the inorganic fine particles, use may be made of silicon dioxide (silica), zinc oxide, aluminum oxide, magnesium oxide, cerium oxide, ferric oxide, copper oxide and so on. In this case, a method of fixing the inorganic fine particles is important. For example, use may be made of hybridizer (Nara Machinery Industry Co., Ltd.) or mechano-fusion (Hosokawa Micron Co., Ltd.), and the liquid powders showing an aerosol state are formed under a predetermined condition (for example processing time).

Here, in order to further improve a repeating durability, it is effective to control a stability of the resin constituting the liquid powders, especially, a water absorbing rate and a solvent insoluble rate. It is preferred that the water absorbing rate of the resin constituting the liquid powders sealed between the substrates is not more than 3 wt % especially not more than 2 wt %. In this case, a measurement of the water absorbing rate is performed according to ASTM-D570 and a measuring condition is 23°C for 24 hours. As for the solvent insoluble rate of the liquid powders, it is preferred that a solvent insoluble rate of the liquid powders, which is defined by the following formula, is not less than 50% more preferably not less than 70%:

$$\text{solvent insoluble rate (\%)} = (B/A) \times 100;$$

(here, A is a weight of the liquid powder before being immersed into the solvent and B is a weight of resin components after the liquid powders are immersed into good solvent at 25°C for 24 hours).

If the solvent insoluble rate is less than 50%, a bleed is generated on a surface of the particle materials constituting the liquid powders when maintaining for a long time. In this case, it affects an adhesion power with the liquid powders and prevents a movement of the liquid powders. Therefore, there is a case such that it affects a durability of the image display. Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

As for a filling amount of the liquid powders, it is preferred to control an occupied volume (volume occupied rate) of the liquid powders to 5 - 70 vol %, more preferably 10 - 65 vol %, most preferably 10 - 55 vol % of a space between the opposed substrates. If the volume occupied rate of the liquid powders is less than 5 vol %, a clear image display is not performed, and if it exceeds 70 vol %, the liquid powders become difficult to move. Here, a space volume means a volume capable of filling the liquid powders obtained by substituting an occupied portion of the partition wall 4 and a seal portion of the device from a space between the opposed substrates 1 and 2.

A surface charge density of a particle substance constituting the liquid powders can be measured as mentioned below. That is, according to a blow-off method, the liquid powders and carrier particles are sufficiently contacted and a saturated charge amount thereof is measured, so that a charge amount per a unit weight of the liquid powders can be measured. Then, a particle diameter and a specific gravity of the particle substance constituting the liquid powders are separately measured, and the surface charge density of the liquid powders is calculated by using them.

<Blow-off measuring theory and method>

In the blow-off method, a mixture of the liquid powders and the carriers are placed into a cylindrical container with nets at both ends, and high-pressure gas is blown from the one end to separate the liquid powders and the carriers, and then only the liquid powders are blown off from the mesh of the net. In this occasion, charge amount of reverse blown polarity remains on the carriers with the same charge amount of the liquid powders carried away out of the container. Then, all of electric flux by this electric charge are collected to Faraday cage, and are charged across a capacitor with this amount. Accordingly, the charge amount of the liquid powders is determined as Q=CV (C: capacity, V: voltage across both ends of the capacitor) by measuring potential of both ends of the capacitor.

In the invention, as a blow-off powder charge amount measuring instrument, TB-200 produced by Toshiba Chemical Co., Ltd. was used, F963-2535 available from Powder TEC Co., Ltd. was employed as the same kind of carriers, and a specific gravity of the particle substance constituting the liquid powder was measured by a multi-volume density meter H1305 produced by Shimadzu Corporation. Then, the charge density per unit surface area (unit: $\mu C/m^2$) was calculated.

INDUSTRIALLY APPLICABILITY

In the image display device according to the invention, it is possible to provide the image display device having rapid response rate due to a dry type display, simple construction, inexpensive cost and excellent stability, by constructing a new image display device in which image display elements enabling to move the particles, to which electrostatic field is directly applied, are arranged in a matrix manner.

Moreover, in the first aspect of the invention, since a coating area of the electrode provided on two substrates respectively is patternized with respect to a projected area of respective cells, the uneven particle distribution to the partition walls and the particle drop at the center portion of respective cells can be prevented, and thus it is possible to provide the image display device which can display even and excellent image.

Further, in the second aspect of the invention, since in the case of arranging the image display panel vertically in a stationary manner, the electrode is patternized in such a manner that no electrode portion is formed at a vertically lower portion in respective cells, the uneven particle distribution to the partition walls and the particle drop at the center portion of respective cells can be prevented, and thus it is possible to provide the image display device which can display even and excellent image.

**Claims**

1. An image display device which comprises an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrates is applied, are made to move so as to display an image, **characterized in that** a coating area of the electrode provided on two substrates respectively is patternized with respect to a projected area of respective cells.

2. The image display device according to claim 1, wherein at least one of the electrodes provided on the two substrates respectively has a coating area in respective cells of 5 - 99 % with respect to a projected area of respective cells.

3. The image display device according to claim 1, wherein at least one of the electrodes provided on the two substrates respectively has a coating area in respective cells of 30 - 90 % with respect to a projected area of respective cells.

4. The image display device according to claim 2 or 3, wherein a contact dimension between at least one of the electrodes provided on the two substrates respectively and the partition wall is less than 50 % of an inner peripheral dimension of respective cells.

5. An image display device which comprises an image display panel, in which two or more groups of particles having different colors and different charge characteristics are sealed in a plurality of cells formed by partition walls between two substrates, at least one of two substrates being transparent, and, in which the particles, to which an electrostatic field produced by electrodes provided to both of the substrates is applied, are made to move so as to display an image, **characterized in that**, in the case of arranging the image display panel vertically in a stationary manner, the electrode is patternized in such a manner that no electrode portion is formed at a vertically lower portion in respective cells.

6. The image display device according to claim 5, wherein an area of the no electrode portion formed at a vertically lower portion in respective cells is 5 - 50 % with respect to a projected area of respective cells.

7. The image display device according to claim 5, wherein an area of the no electrode portion formed at a vertically lower portion in respective cells is 15 - 45 % with respect to a projected area of respective cells.

## FIG. 1a

## FIG. 1b

## FIG. 1c

EP 1 577 702 A1

# FIG. 2a

# FIG. 2b

# FIG. 3

Square cell
grid arrangement

Square cell
honeycomd arrangement

Hexagonal cell
honeycomd arrangement

Circular cell
grid arrangement

Circular cell
honeycomd arrangement

Line cell

# FIG. 4

# FIG. 5a

12-1
12-1a
7
11

Electrode 1

# FIG. 5b

12-2
12-2a
7
11
12-2b

Electrode 2

# FIG. 5c

12-3
12-3a
7
11
12-3b

Electrode 3

EP 1 577 702 A1

## FIG. 6a

13-1
13-1a
7
11

Electrode 4

## FIG. 6b

13-2
13-2a
7
11

Electrode 5

## FIG. 6c

13-3
13-3a
7
13-3b
11

Electrode 6

EP 1 577 702 A1

# FIG. 7a   FIG. 7b   FIG. 7c

Vertical direction upper

Vertical direction lower

22-1
22-1a
7
22-1b
11

Electrode 11

22-2
22-2a
7
22-2b
11

Electrode 12

22-3
22-3a
7
22-3b
11

Electrode 13

# FIG. 8a

# FIG. 8b

Vertical direction upper

Vertical direction lower

23-1

23-1a

7

11

Electrode 14

23-2

23-2a

7

11

23-2b

Electrode 15

<div align="center">

**INTERNATIONAL SEARCH REPORT**

</div>

| | International application No. |
|---|---|
| | PCT/JP03/16359 |

**A. CLASSIFICATION OF SUBJECT MATTER**
Int.Cl$^7$ G02F1/167

According to International Patent Classification (IPC) or to both national classification and IPC

**B. FIELDS SEARCHED**

Minimum documentation searched (classification system followed by classification symbols)
Int.Cl$^7$ G02F1/167

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-196739 A (Fuji Xerox Co., Ltd.), 12 July, 2002 (12.07.02), Fig. 2 (Family: none) | 1–7 |
| X | JP 2002-014376 A (Fuji Xerox Co., Ltd.), 18 January, 2002 (18.01.02), Fig. 2 (Family: none) | 1–7 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>14 January, 2004 (14.01.04) | Date of mailing of the international search report<br>03 February, 2004 (03.02.04) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/16359

---

**Box I Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

---

**Box II Observations where unity of invention is lacking (Continuation of item 3 of first sheet)**

This International Searching Authority found multiple inventions in this international application, as follows:
    The international search has revealed that the invention of claim 1 is not novel since it is disclosed in document JP 2002-196739 A (Fuji Xerox Co., Ltd.), 12 July, 2002 (12.07.02), Fig. 2.
    Therefore, claims 1-4 and claims 5-7 do not comply with the requirement of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

---

Form PCT/ISA/210 (continuation of first sheet (1)) (July 1998)